# EUROPEAN PATENT APPLICATION

(11) **EP 4 576 320 A1**
(43) Date of publication of application: **25.06.2025**
(21) Application number: 23218938.1
(22) Date of filing: 21.12.2023
(51) Int. Cl.: H01M 10/48, H01M 10/613, H01M 10/625, H01M 10/633, H01M 10/6554

(54) **A HEAT-TRANSFER SYSTEM FOR A BATTERY**

(71) Applicant: Volvo Car Corporation, 405 31 Göteborg (SE)
(72) Inventor: CÉSAR, Rui, 40531 Göteborg (SE)
(74) Representative: Maiwald GmbH

(57) **Abstract**

The disclosure relates to a heat-transfer system (10) for a battery (2) having at least one battery unit (11), the heat-transfer system (10) comprising a first heat-conducting element (12) for thermal connection to the at least one battery unit (11), the heat-transfer system (10) further comprising a second heat-conducting element (13) for thermal connection to a battery external environment, and the heat-transfer system (10) comprising an actuator (18), the actuator (18) being configured to alter the position the first heat-conducting element (12) between a first position for connecting the first heat-conducting element (12) to at least one of the second heat-conducting element (13) and the at least one battery unit (11) and a second position for disconnecting the first heat-conducting element (12) from at least one of the second heat-conducting element (13) and the at least one battery unit (11), and the first heat-conducting element (12) being configured to receive heat from the at least one battery unit (11) and transfer it to the second heat-conducting element (13) in the first position.

## Description

### TECHNICAL FIELD

The present disclosure relates to a heat-transfer system for a battery, a battery, a method for controlling a heat-transfer in a battery and a computer program product.

### BACKGROUND ART

In battery systems, such as batteries for electric vehicles and other applications, effective temperature control is critical for battery performance and lifespan.

However, the structure of the battery of known cooling systems or heat-transfer systems inevitably promotes heat exchange with the environment through physical connections between the battery cells and a battery external environment, which is exposed to environmental temperature conditions. This may lead to inefficient cooling of the battery cells and thus to impaired performance and lifespan of the battery.

### SUMMARY

The above problem is at least partially solved or alleviated by the subject matter of the independent claims of the present disclosure, wherein further examples are incorporated in the dependent claims.

According to a first aspect, there is provided a heat-transfer system for a battery having at least one battery unit, the heat-transfer system comprising a first heat-conducting element for thermal connection to the at least one battery unit, the heat-transfer system further comprising a second heat-conducting element for thermal connection to a battery external ambient environment, and the heat-transfer system comprising an actuator, the actuator being configured to alter the position of at least a portion of the first heat-conducting element between a first position for connecting the first heat-conducting element to at least one of the second heat-conducting element and the at least one battery unit and a second position for disconnecting the first heat-conducting element from at least one of the second heat-conducting element and the at least one battery unit, and the first heat-conducting element being configured to receive heat from the battery unit and transfer it to the second heat-conducting element in the first position.

Accordingly, the heat-transfer system enables variable control of heat-transfer within a battery having at least one battery unit. A battery unit may be a battery cell, several battery cells which may be connected with each other, a battery module with several battery cells, wherein several battery units may form the battery. Heat-transfer may mean the transfer of heat between two components, for example between the first heat-conducting element and the at least one battery unit and/or the transfer of heat between the first heat-conducting element and the second heat-conducting element. The first heat-conducting element is intended for, in particular configured for, thermal connection to the at least one battery unit. Thermal connection may describe a physical link or interface that allows efficient transfer of heat from one component to another. This means heat generated by the at least one battery may be absorbed and transferred via the first heat-conducting element to the second heat-conducting element. The first heat-conducting element may further facilitate the transfer of heat from the at least one battery unit to a battery external environment. The first heat-conducting element may be made of copper, aluminum, graphite/graphene, ceramics or any other material or combination of materials. It is noted that the choice of material may depend on the dimension and/or the design of the first heat-conducting element and the second heat-conducting element. The choice of material or combination of materials may be chosen based on their coefficient of heat-transfer and/or other measures of heat-transfer. The second heat-conducting element is intended, in particular configured, for thermal connection to the battery external environment. Battery external environment may refer to an area outside of the at least one battery unit. The second heat-conducting element may for example form a part of a vehicle chassis to facilitate efficient heat-transfer from the at least one battery unit to the battery external environment. The second heat-conducting element may be configured to receive heat from the first heat-conducting element. The heat-transfer system further comprises an actuator configured to alter the position of the first heat-conducting element between a first and a second position. In the first position the first heat-conducting element may be connected to at least one of the second heat-conducting element and the at least one battery unit. In the first position the first heat-conducting element may be configured to receive heat from the at least one battery unit and transfer it to the the second heat-conducting element. In the second position the first heat-conducting element may be disconnected from the second heat-conducting element and/or the at least one battery unit. In this way, the heat-transfer between the at least one battery unit and the second heat-conducting element may be interrupted. Thus, the heat-transfer system may provide both, a prevention of degradation of a battery during high temperatures in the first position and a thermal insulation of a battery from the external ambient environment in the second position to maintain an optimal working temperature for example. Additionally the heat-transfer system may be connectable with a pre-existing cooling system of the vehicle, such as a thermal control system of the vehicle. The connection of the heat-transfer system may be achieved by using at least one of a valve and/or pump. Thus, the heat-transfer system may work together with the thermal control system of the vehicle or independently of it.

According to an example, the first heat-conducting element may comprise a first portion for connection to the at least one battery unit in the first position and a second portion for connection to the second heat-conducting element in the first position, the second portion may be arranged at an end of the first portion. The first portion may be designed to maximize a contact surface area with the at least one battery unit. For example, the first portion may be arranged to be in direct contact with the at least one battery unit to facilitate the heat-transfer from the at least one battery unit to the first portion of the first heat-conducting element. Thus, most or substantially the entire surface of the first portion facing the at least one battery unit may be configured to come into contact with the at least one battery unit. Any other arrangement that enables heat-transfer is also conceivable. The second portion of the first heat-conducting element may be designed to maximize a contact surface area with the second heat-conducting element. Thus, most or substantially the entire surface of the second portion facing the second heat-conducting element may be configured to come into contact with the second heat-conducting element. The first portion and the second portion may be arranged in a modular way. This means that the first portion and the second portion may be separate parts which may be in contact with each other. For example, the first portion and the second portion may be rectangular in shape, where the shapes can be connected with each other. This may enhance its versatility and adaptability in managing heat-transfer within the system. However, the first portion and the second portion may also be arranged in one piece. It is also conceivable that the first portion and the second portion may be divided in several sub portions.

According to an example, the second portion of the first heat-conducting element may extend transverse to the first portion of the first heat-conducting element. Transverse may mean at substantially a right angle or substantially perpendicular to the first portion. A right angle may mean that the second portion could extend at an angle of 90 degrees relative to the first portion. Other configurations are possible, for example the second portion might be curved or bent, allowing for more flexibility in the connection or enhancing the heat-transfer in certain directions. Instead of being strictly transverse, the second portion could intersect with the first portion. This means that the two portions of the heat-conducting element (the first portion and the second portion) are not necessarily arranged at a right angle or perpendicular to each other. Instead of extending at a clear 90-degree angle, the second portion might cross or overlap with the first portion at some point. This could serve specific design goals, such as providing additional structural support. The first heat-conducting element could be designed in a modular way, allowing for interchangeable parts with different orientations. This could provide flexibility in adapting the system to diverse applications. For example, the modular design may allow for choosing the material of the different portions of the first heat-conducting element for transferring heat in the first position and insulating the at least one battery unit in the second position.

According to an example, the heat-transfer system may comprise a control system for receiving a signal indicative of the temperature of the at least one battery unit. The control system may further be configured to control the actuator to alter the position of at least the first portion and/or the second portion of the first heat-conducting element based on the signal. To receive the signal, a measurement of the temperature may be performed. To measure the temperature of the at least one battery unit, one or more sensors could be integrated into or arranged at or near the at least one battery unit. This sensor or these sensors could be thermocouples, thermistors, infrared sensors, or any other type capable of providing accurate temperature measurements. The signal indicative of the temperature in the heat-transfer system could be at least one of a voltage signal, digital signal, wireless transmission signal or similar based on the type of sensor or technology used. For example, the control system may receive the signal indicative of the temperature of the at least one battery unit and processes it to determine an appropriate action. The control system may include at least one or multiple algorithms, thresholds, and/or logics to make decisions based on the temperature information. Based on the processed temperature information, the control system may decide whether an adjustment of the heat-transfer shall be provided. If the control system determines that an adjustment is favorable or needed, it may send one or more signals or commands to the actuator. The actuator may respond by altering the position of the first portion and/or the second portion of the first heat-conducting element, bringing it for example in contact with the second heat-conducting element to transfer heat from the at least one battery unit to the battery external environment. The control system may optimize the heat-transfer based on real-time temperature measurements, preventing overheating or excessive cooling of the at least one battery unit.

According to an example, the heat-transfer system may be configured to control the actuator to alter the position of at least the portion of the first heat-conducting element based on a comparison of the signal to a threshold. For example, if the temperature signal exceeds a predefined threshold, indicating the at least one battery unit is overheating, the control system may instruct the actuator to enhance heat-transfer by altering the position of the first heat-conducting element for increased heat-transfer from the at least one battery unit. Another example could be if the temperature signal falls below a predefined threshold, suggesting the battery unit is too cold. In this case, the control system might instruct the actuator to alter the position of the first heat-conducting element to reduce the heat-transfer from the at least one battery unit for increased insulating efficiency. Thus, the first heat-conducting element may have an insulating property in the second position. Depending on whether the first heat-conducting element has an insulating or cooling effect, the first heat-conducting element can also be arranged in any intermediate position between the first and the second position. The adaptability of the first heat-conducting element to various positions allows the heat-transfer system to dynamically respond to different thermal conditions, optimizing both insulation and cooling based on the current conditions of the at least one battery unit.

According to an example, the heat-transfer system may be configured to control the actuator for altering the position of at least the first portion and/or the second portion of the first heat-conducting element based on the signal indicative of the temperature of the at least one battery unit and at least one further signal indicative of the temperature of a vehicle comprising the heat-transfer system and/or a temperature of a battery external environment. The control system may process the information from at least one of an additional signal related to the temperature of a vehicle comprising the heat-transfer system and/or the temperature signals of the battery external environment to make decisions about the position of the first heat-conducting element. One or more additional sensors may be arranged at or within the vehicle for this purpose or pre-existing sensors within the vehicle may be used for this. Also, signals indicative of performance requirements such as vehicle speed may contribute to the processing step of the control system. This may allow for proactive measures to prevent overheating during, e.g., high-speed driving.

According to an example, the actuator may be configured to alter the position of at least the first portion and/or the second portion of the first heat-conducting element by at least one of a linear movement and/or a rotating movement of at least the first portion and/or the second portion of the first heat-conducting element. If the actuator is configured for linear movement, it may extend or retract a portion of the first heat-conducting element along a substantially straight line, facilitating the thermal connection with the second heat-conducting element. If the actuator is configured for rotating movement, it may pivot or rotate a portion of the first heat-conducting element, achieving a similar effect by changing its orientation for improved heat-transfer. The actuator may also integrate both linear and rotational movements, or run in sequential linear and rotational movements, for example.

According to an example, the heat-transfer system may further comprise a spacer for spacing apart the second heat-conducting element from the at least one battery unit. The spacer may be arranged between the at least one battery unit and the second heat-conducting element. The spacer may prevent a direct heat-transfer of the at least one battery unit to the second heat-conducting element. The design of the spacer could be variable in width, thickness, number or similar allowing for adjustments in the distance between the second heat-conducting element and the at least one battery unit. In another example, a cooling plate may be arranged between the spacer and the at least one battery unit. This way the at least one battery unit is further thermally insulated from the second heat-conducting element.

According to an example, the spacer may have a lower thermal conductivity than the second heat-conducting element. Accordingly, the spacer may be less efficient at transferring heat compared to the second heat-conducting element. This may enhance the thermal insulation properties of the spacer, insulating the at least one battery unit from the second heat-conducting element, allowing for controlled heat-transfer within the system. Depending on the material, the spacer may also absorb shocks or vibrations, that would otherwise damage the at least one battery unit or the cooling plate respectively. The choice of material or combination of materials may be chosen based on their thermal and mechanical properties.

According to an example, the heat-transfer system may further comprise a cooling plate for thermal connection to the at least one battery unit, and a heat sink. The cooling plate may be a component designed to establish a thermal connection with the at least one battery unit. A thermal connection to the battery unit may allow for efficient heat-transfer for example by absorbing excess heat from the at least one battery unit. The heat sink could be integrated into or arranged at the second heat-conducting element and may provide an additional mechanism for transferring heat. It can absorb heat from various components in the system and release it to the battery external environment, enhancing overall cooling of the at least one battery unit.

According to an example, the heat-transfer system may further comprise a cooling circuit for connecting the cooling plate to the heat sink. For example, if a temperature of the at least one battery unit reaches a certain threshold, e.g., by applying a heavy load on the battery, which may be the case for uphill driving or warm weather conditions where further thermal loads due to usage of air conditioning stresses the thermal system of the vehicle, which increases the demand on the at least one battery unit, an additional heat-transfer mechanism may be activated. In this example, the cooling circuit may be a pathway that facilitates the flow of a cooling medium (such as a liquid or gas), e.g., comprising or being water, between the cooling plate and the heat sink. This may be achieved by integrating at least one of a valve and/or pump thus creating a loop circuit between the heat sink and the cooling plate. Thus, in response to high temperatures of the at least one battery unit or where a high battery performance is expected due to high vehicle speed for example, the control system may activate the valves and/or the pumps to connect the cooling circuit to absorb excess heat from the battery unit.

According to an example, the second heat-conducting element may be at least a portion of a battery housing for the at least one battery unit. The part of the battery housing connectable to the first heat-conducting element may be in connection to a battery external environment. This may ensure effective heat-transfer between the at least one battery unit and the battery external environment or environmental conditions. In another example, the at least one battery unit and the cooling plate may be assembled on the opposite side of the battery housing portion, which may be in connection with the battery external environment, keeping an open air section between the at least one battery unit and the battery housing. This promotes the insulating properties of the heat-transfer system in the second position and the heat-transfer in the first position. The second heat-conducting element, or at least the part that may be in connection with the battery external environment, may be made of materials with a high thermal conductivity for effectively transporting the heat transferred by the first heat-conducting element.

According to a second aspect, there is provided a battery having at least one battery unit, the battery comprising the heat-transfer system.

According to a third aspect, there is provided a method for controlling a heat-transfer in a battery having at least one battery unit, the method comprising:
- obtaining a signal indicative of a temperature of the at least one battery unit;
- comparing the signal to a threshold;
- obtaining a control signal for an actuator of the battery based on the comparison, the control signal being executable by the actuator for altering a position of at least a portion of a first heat-conducting element of the battery between a first position for connecting the first heat-conducting element to at least one of the second heat-conducting element of the battery and the at least one battery unit and a second position for disconnecting the first heat-conducting element from at least one of the second heat-conducting element and the at least one battery unit.

The method may be at least partly computer-implemented, wherein one, multiple or all the steps of the method may be carried out by a computer. The method may be implemented in software or in hardware, or in software and hardware. Further, the method may be carried out by computer program instructions running on means that provide data processing functions. The data processing means may be a suitable computing means, such as an electronic control module etc., which may also be a distributed computer system. The data processing means or the computer, respectively, may comprise one or more of a processor, a memory, a data interface, or the like.

According to a fourth aspect, there is provided a computer program product comprising instructions which, when the program is executed by a computer, cause the computer to carry out the method of the third aspect. The computer program product may be a computer program as such or a product, e.g., a computer readable medium, having stored the computer program thereon.

It is noted that the above examples may be combined with each other irrespective of the aspect involved. In particular, aspects of the disclosure described herein may be applied to the heat-transfer system for a battery, the battery, the method for controlling a heat-transfer in a battery and the computer program product.

These and other aspects of the present disclosure will become apparent from and elucidated with reference to the examples described hereinafter.

### BRIEF DESCRIPTION OF DRAWINGS

Examples of the disclosure will be described in the following with reference to the following schematic drawings.
- Figures 1A - 1B: show an example of a heat-transfer system in a first position (Fig. 1A) and a second position (Fig. 1B);
- Figure 2: shows an alternative example of a heat-transfer system;
- Figures 3 A - 3B: show variations in the heat-transfer system of any one of Figs. 1A, 1B and 2;
- Figure 4: shows a schematic illustration of a method for controlling a heat-transfer in a battery;
- Figure 5: shows a vehicle comprising a heat-transfer system according to this disclosure.

### DETAILED DESCRIPTION

The Figures are merely schematic representations and serve only to illustrate examples of the disclosure. Identical or equivalent elements are in principle provided with the same reference signs.

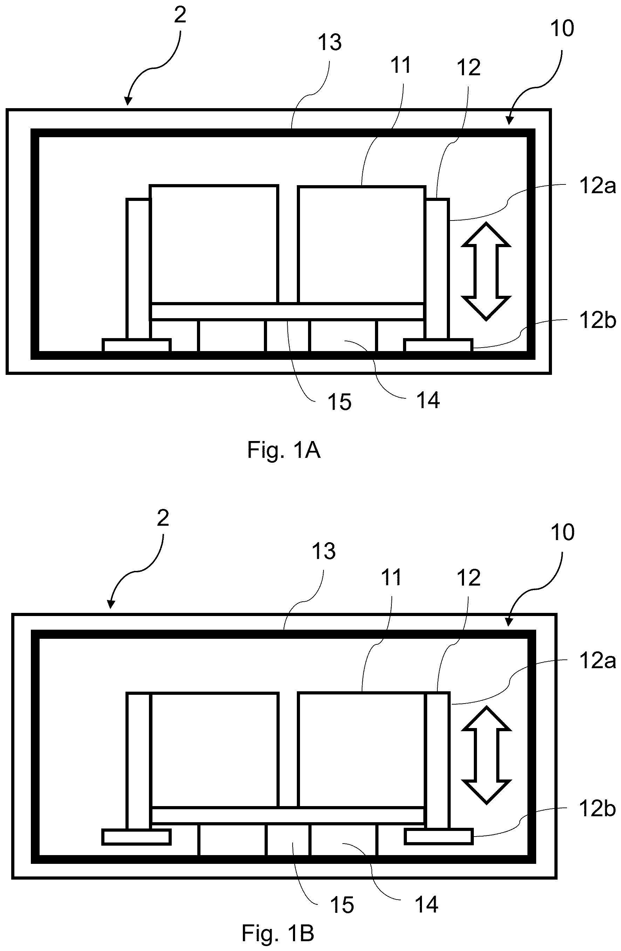

Figures 1A and 1B show a battery 2 comprising a heat-transfer system 10, the heat-transfer system 10 comprising two battery units 11, one first heat-conducting element 12 arranged at each battery unit 11 and a second heat-conducting element 13. This example shows a battery 2 comprising two battery units 11, but also one or several battery units 11 are conceivable. In this example one first heat-conducting element 12 is arranged at each battery unit 11, but constellations are also possible in which only one first heat-conducting element 12 is provided at one side of the battery unit 11. However, one first heat-conducting element 12 can also be arranged at each battery unit 11 or only a partial number of them. In the example shown, a first heat-conducting element 12 is arranged at an outside facing side of each of the two battery units 11 to transfer the heat. However, configurations are also conceivable in which one or each of the first heat-conducting elements 12 is arranged at an inside facing side of the battery units 11. In the example shown, this would be the space between the two battery units 11. But also constellations in which the one or each of the first heat-conducting elements 12 is arranged at an above or underneath facing side of the battery units 11. The first heat-conducting element 12 further comprises a first portion 12a and a second portion 12b. In this example, the first portion 12a and the second portion 12b are of rectangular shape and the second portion 12b of the first heat-conducting element 12 extends transverse to the first portion 12a. However, other configurations are also possible in which the first portion 12a and the second portion 12b are curved or comprise other forms, distinct to each other. The first heat-conducting element 12 could also be in one piece. The first portion 12a of the first heat-conducting element is in thermal connection with the battery unit 11 and is configured to receive heat from the battery unit 11. The position of the first heat-conducting element 12 can be altered in a way, that in a first position (Fig. lA) the second portion 12b of the first heat-conducting element 12 is connected to the second heat-conducting element 13. This way, the received heat from the battery unit 11 can be transferred from the first heat-conducting element 12 to the second heat-conducting element 13. In the second position (Fig. 1B) the second portion 12b of the heat-conducting element 12 is disconnected from the second heat-conducting element 13 and the heat-transfer from the first heat-conducting element 12 to the second heat-conducting element 13 is interrupted. The alteration between the first position and the second position may be facilitated by an actuator 18 (indicated by the arrow). In this example the alteration of the position between the first and the second position occurs in a linear way. The alteration between the first position and the second position could also be in a rotating manner or in a linear and rotating manner respectively. In this example the position of both heat-conducting elements 12 are altered parallel in time. Configurations in which both or several first heat-conducting elements 12 are controlled and thus altered in position independently of each other are also possible. Additionally, two spacers 14 and a cooling plate 15 are arranged between the second heat-conducting element 13 and the battery unit 11. The spacers 14 prevents a direct heat-transfer of the battery unit 11 to the second heat-conducting element 13. For this purpose, the spacers 14 may have a lower thermal conductivity than the second heat-conducting element 13. Two rectangular spacers 14 are shown here exemplary. But there may be just one spacer 14 or several spacers 14 arranged between the second heat-conducting element 13 and the cooling plate 15. Also the form of the spacers 14 may vary and may be in cylindrical shape or any other shape suitable. Also examples in which the spacer 14 is directly arranged between the battery unit 11 and the second heat-conducting element 13 is conceivable. The cooling plate 15 is arranged between the battery unit 11 and the second heat-conducting element 13 and establishes a thermal connection with the battery unit 11 and allows for additional heat-transfer of for example excess heat. The second heat-conducting element 13 in this example represents a battery housing 13. The part of the battery housing 13 connectable to the first heat-conducting element 12 may be in connection to a battery external environment to ensure effective heat-transfer between the one battery unit 11 and the environment.

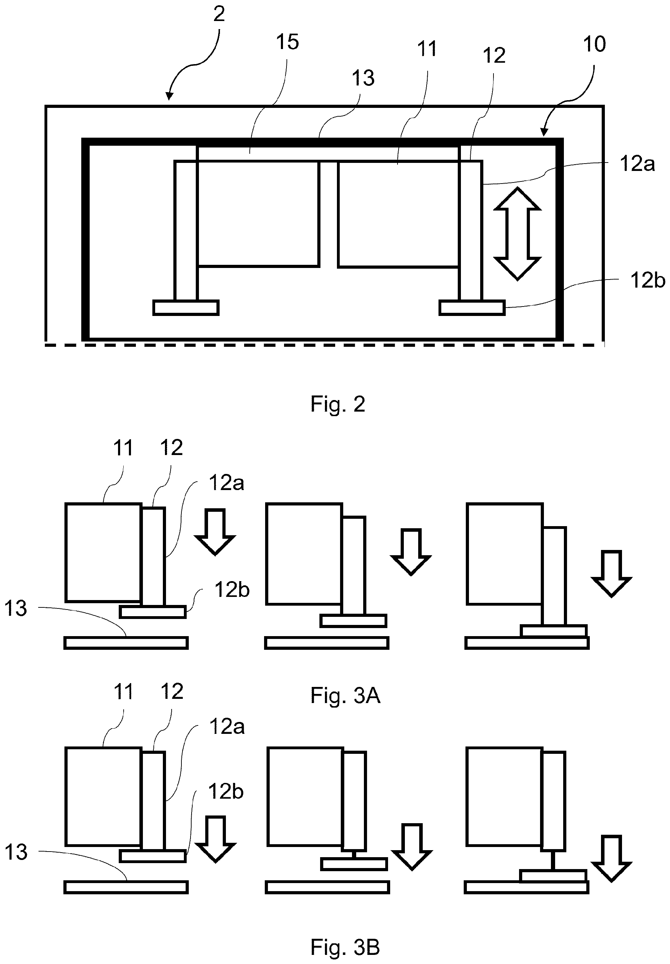

Figure 2 shows an example of a heat-transfer system 10, which differs from the one of Figs. 1A, 1B in that the battery unit 11 and the cooling plate 15 are assembled on the opposite side of the part of the second heat-conducting element 13 or the battery housing 13 which is in contact with the battery external environment (indicated by the dotted lines). The battery external environment may refer to an area outside of the battery unit 11 or the battery 2. The battery housing 13 may for example form a part of a vehicle chassis to facilitate efficient heat-transfer from the battery unit 11 to the battery external environment. This way a spatial distance between the part of the battery housing which is in contact with the battery external environment and the battery unit 11 is achieved. Or in other words an open air section between the at least one battery unit 11 and the battery housing 13 is maintained. This promotes for example the insulating properties of the heat-transfer system 10 in the second position as the battery unit 11 is not in contact with the battery housing 13 portion which is in contact with the battery external environment. The heat-transfer system 10 or the first heat-conducting element 12 thereby becomes the only part of the heat-transfer system 10 responsible for transferring heat from the at least one battery unit 11 to the battery housing 13 being in contact with the battery external environment. Assembling the at least one battery unit 11 and the heat-transfer system 10 this way, a spacer 14 as shown in Figs. 1A and 1B may not be required.

Figures 3A and 3B show exemplary two variations in the heat-transfer system of any one of Figs. 1A, 1B and 2. Figure 3A shows the example of heat-transfer mentioned above where the position of the first heat-conducting element 12 is moved from a first position to a second position, indicated by the arrows. Figure 3B shows an embodiment in which not the entire first heat-conducting element 12 is moved, but only a portion, in this example the second portion 12b, of the first heat-conducting element 12. In the second position, the second portion 12b is in thermal connection with the second heat-conducting element 13, while the position of the first portion 12a of the heat-conducting element 12 remains unchanged. This way, the first portion 12a could have better isolating properties compared to the embodiment of Fig. 3A. In this example, the second portion 12b of the first heat-conducting element 12 extends transverse to the first portion 12a of the first heat-conducting element 12 and the movement of the first portion 12a and/or the second portion 12b of the first heat-conducting element 12 occurs in a linear manner. Other configurations of heat-transfer are possible depending on the type of actuator 18 (indicated by the arrows) being used. The actuator 18 may move the position of the first portion 12a and/or the second portion 12b of the first heat-conducting element 12 in a linear and/or rotating movement.

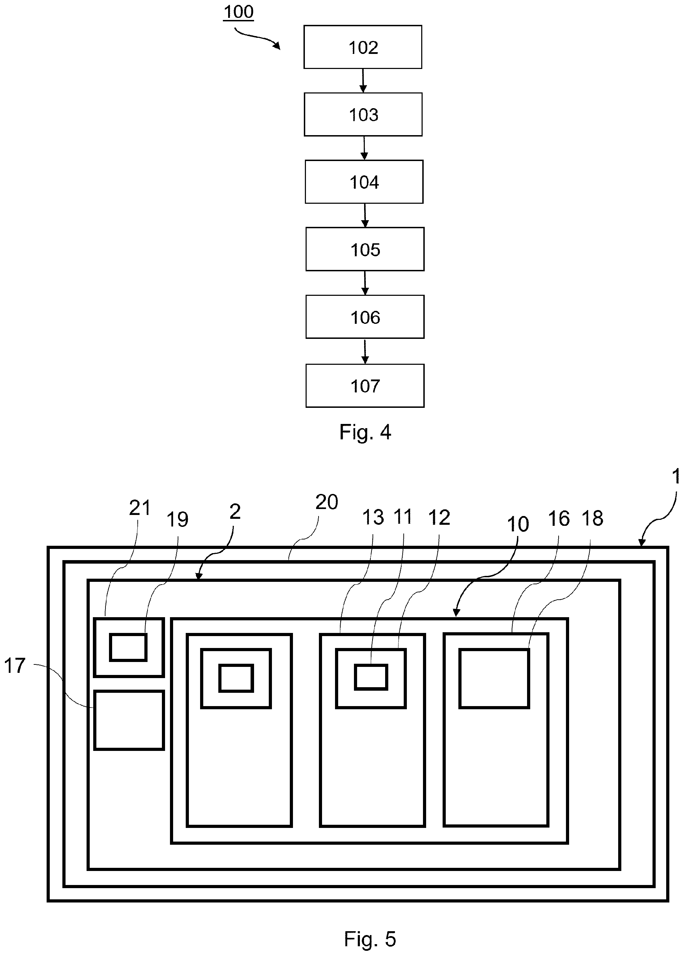

In Fig. 4, steps for carrying out the method 100 for transferring heat from an at least one battery unit 11 to a battery external environment are shown. The method 100 may be carried out by a data processing apparatus 21, which comprises a computer program product 19. In a first step 102 of method 100, a signal indicative of a temperature of at least one battery unit 11 may be obtained by the data processing apparatus 21. For example, the signal may have been generated by a sensor 17, especially a temperature sensor 17. In a next step 103 of method 100, the signal indicative of a temperature of the at least one battery unit 11 is obtained by a control system 16. The control system 16 comprises an actuator 18 for altering a position of a first heat-conducting element 12. This signal may be provided in real-time, thus giving real-time information about the thermal state of the at least one battery unit 11 during its operation. In step 104 of method 100 the obtained signal is compared to a predetermined threshold. This threshold serves as a reference point, determining whether the temperature of the at least one battery unit 11 is within an acceptable range or if it has exceeded a predefined threshold. Based on the comparison of the temperature with the threshold, a control signal is generated by the data processing apparatus 21 in a further step 105 of method 100. This control signal controls the actuator 18, which in turn can in a further step 106 alter the position of the first heat-conducting element 12 according to the determined temperature of the at least one battery unit 11. The position of the actuator 18 may be altered between a first position for connecting the first heat-conducting element 12 to at least one of the second heat-conducting element 13 of the at least one battery unit 11 and a second position for disconnecting the first heat-conducting element 12 from at least one of the second heat-conducting element 13 and the at least one battery unit 11. The control system 16 may continuously monitor the temperature of the at least one battery unit 11 with the sensor 17 and adjust the position of the first heat-conducting element 12 accordingly. This closed-loop system actively responds to temperature changes, optimizing heat-transfer, and maintaining ideal operating conditions for the at least one battery unit 11. In an additionally step 106 if a temperature of the at least one battery unit 11 reaches a certain threshold, an additional heat-transfer mechanism comprising a cooling plate 15 and a heat sink may be activated. This may be achieved by activating at least one of a valve and/or pump, thus creating a loop circuit between the heat sink and the cooling plate 15. In a further alternative step 107 the heat-transfer system 10 described can be combined with a pre-existing cooling system 20 of the vehicle 1.

Figure 5 shows a vehicle 1 comprising a heat-transfer system 10 for a battery 2 and a battery 2. The heat-transfer system 10 comprises at least one battery unit 11 and a control system 16 comprising an actuator 18. The control system 16 generates a control signal if a predefined temperature threshold is exceeded. The actuator 18 receives the control signal and is controlled accordingly. The actuator is configured to alternate a position of a first heat-conducting element 12 between a first position, for connecting the first heat-conducting element 12 to the second heat-conducting element 13, and a second position for disconnecting the first heat-conducting element 12 from the second heat-conducting element 13. Heat produced by the at least one battery unit 11 is absorbed by the first heat-conducting element 12 and is transferred to the second heat-conducting element 13 in the first position. Whereas in the second position, this heat-transfer from the first heat-conducting element 12 to the second heat-conducting element 12 is interrupted. Additionally, the heat-transfer system 10 can be combined with a pre-existing cooling system 20 of the vehicle 1 by activating at least one of a pump and/or valve, for example. At least some or all of the previously mentioned steps 102 to 107 may be carried out by a data processing apparatus 21, for example. The battery 2 further comprises one or more sensors 17, preferably a temperature sensors 17. The sensor 17 monitors the temperature of the at least one battery unit 11. As shown herein exemplary, the control system 16 may be part of a heat-transfer system 10 including the actuator 18 and the respective components for transferring heat from the at least one battery 11 to a battery external environment. Alternatively, the control system 16, may be located outside of the heat-transfer system 10 within the vehicle 1. The data processing apparatus 21, the computer program product 19 may be located near or within the battery 2 as shown in this example or outside of the battery 2 within the vehicle 1. The sensor 17 may be arranged within or at the battery 2 or within or at the at least one battery unit 11. The computer program product 19 may be running on a data processing apparatus 21 of the vehicle 1 which could be a central or board computer for example, carrying out other tasks in addition to the method 100. Consequently, the heat-transfer may be carried out by the heat-transfer system 10 by transferring heat from the at least one battery unit 11 with the first heat-conducting element 12 via the second heat-conducting element 13.

As used herein, the phrase "at least one," in reference to a list of one or more entities should be understood to mean at least one entity selected from any one or more of the entities in the list of entities, but not necessarily including at least one of each and every entity specifically listed within the list of entities and not excluding any combinations of entities in the list of entities. This definition also allows that entities may optionally be present other than the entities specifically identified within the list of entities to which the phrase "at least one" refers, whether related or unrelated to those entities specifically identified. Thus, as a non-limiting example, "at least one of A and B" (or, equivalently, "at least one of A or B," or, equivalently "at least one of A and/or B") may refer, in one example, to at least one, optionally including more than one, A, with no B present (and optionally including entities other than B); in another example, to at least one, optionally including more than one, B, with no A present (and optionally including entities other than A); in yet another example, to at least one, optionally including more than one, A, and at least one, optionally including more than one, B (and optionally including other entities). In other words, the phrases "at least one," "one or more," and "and/or" are open-ended expressions that are both conjunctive and disjunctive in operation. For example, each of the expressions "at least one of A, B, and C," "at least one of A, B, or C," "one or more of A, B, and C," "one or more of A, B, or C," and "A, B, and/or C" may mean A alone, B alone, C alone, A and B together, A and C together, B and C together, A, B, and C together, and optionally any of the above in combination with at least one other entity.

Other variations to the disclosed examples can be understood and effected by those skilled in the art in practicing the claimed disclosure, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

### LIST OF REFERENCE SIGNS

- 1: vehicle
- 2: battery
- 10: heat-transfer system
- 11: battery unit
- 12: first heat-conducting element
- 13: second heat-conducting element
- 14: spacer
- 15: cooling plate
- 16: control system
- 17: sensor
- 18: actuator
- 19: computer program product
- 20: pre-existing cooling system
- 21: data processing apparatus
- 100: method
- S102-S107: steps of the method

## Claims

1. A heat-transfer system (10) for a battery (2) having at least one battery unit (11), the heat-transfer system (10) comprising a first heat-conducting element (12) for thermal connection to the at least one battery unit (11), the heat-transfer system (10) further comprising a second heat-conducting element (13) for thermal connection to a battery external environment, and the heat-transfer system (10) comprising an actuator (18), the actuator (18) being configured to alter the position of the first heat-conducting element (12) between a first position for connecting the first heat-conducting element (12) to at least one of the second heat-conducting element (13) and the at least one battery unit (11) and a second position for disconnecting the first heat-conducting element (12) from at least one of the second heat-conducting element (13) and the at least one battery unit (11), and the first heat-conducting element (12) being configured to receive heat from the at least one battery unit (11) and transfer it to the second heat-conducting element (13) in the first position.

2. The heat-transfer system (10) of claim 1, the first heat-conducting element (12) comprising a first portion (12a) for connection to the at least one battery unit (11) in the first position and a second portion (12b) for connection to the second heat-conducting element (13) in the first position, the second portion (12b) being arranged at an end of the first portion (12a).

3. The heat-transfer system (10) of claim 2, the second portion (12b) of the first heat-conducting element (12) extending transverse to the first portion (12a) of the first heat-conducting element (13).

4. The heat-transfer system (10) of any one of the previous claims, the heat-transfer system (10) comprising a control system (16) for receiving a signal indicative of the temperature of the at least one battery unit (11), the control system (16) being configured to control the actuator (18) to alter the position of at least the first portion (12a) and/or the second portion (12b) of the first heat-conducting element (12) based on the signal.

5. The heat-transfer system (10) of claim 4, the control system (16) being configured to control the actuator (18) to alter the position of at least the first portion (12a) and/or the second portion (12b) of the first heat-conducting element (12) based on a comparison of the signal to a threshold.

6. The heat-transfer system (10) of claim 4 or claim 5, the control system (16) being configured to control the actuator (18) for altering the position of at least the first portion (12a) and/or the second portion (12b) of the first heat-conducting element (12) based on the signal indicative of the temperature of the at least one battery unit (11) and at least one further signal indicative of the temperature of a vehicle comprising the heat-transfer system (10) and/or a temperature of a surrounding of the at least one battery unit (11).

7. The heat-transfer system (10) of any one of the previous claims, the actuator (18) being configured to alter the position of at least the first portion (12a) and/or the second portion (12b) of the first heat-conducting element (12) by at least one of a linear movement and/or a rotating movement of at least the first portion (12a) and/or the second portion (12b) of the first heat-conducting element (12).

8. The heat-transfer system (10) of any one of the previous claims, the heat-transfer system (10) further comprising a spacer (14) for spacing apart the second heat-conducting element (13) from the at least one battery unit (11).

9. The heat-transfer system (10) of claim 8, the spacer (14) having a lower thermal conductivity than the second heat-conducting element (13).

10. The heat-transfer system (10) of any one of the previous claims, the heat-transfer system (10) further comprising a cooling plate (15) for thermal connection to the at least one battery unit (11), and a heat sink.

11. The heat-transfer system (10) of claim 10, the heat-transfer system (10) further comprising a cooling circuit for connecting the cooling plate (15) to the heat sink.

12. The heat-transfer system (10) of any one of the previous claims, the second heat-conducting element (13) being at least a portion of a battery housing for the at least one battery unit (11).

13. A battery (2) having at least one battery unit (11), the battery (2) comprising the heat-transfer system (10) of any one of the previous claims 1 to 12.

14. A method for controlling a heat-transfer (10) in a battery (2) having at least one battery unit (11), the method comprising:
- obtaining a signal indicative of a temperature of the at least one battery unit (11);
- comparing the signal to a threshold;
- obtaining a control signal for an actuator (18) of the at least one battery unit (11) based on the comparison, the control signal being executable by the actuator (18) for altering a position of at least a first portion (12a) and/or a second portion (12b) of a first heat-conducting element (12) of the at least one battery unit (11) between a first position for connecting the first heat-conducting element (12) to at least one of the second heat-conducting element (13) of the at least one battery unit (11) and a second position for disconnecting the first heat-conducting element (12) from at least one of the second heat-conducting element (13) and the at least one battery unit (11).

15. A computer program product (19) comprising instructions which, when the program is executed by a computer, cause the computer to carry out the method of claim 14.
